# EUROPEAN PATENT SPECIFICATION

(11) **EP 2 109 723 B1**
(45) Date of publication and mention of the grant of the patent: **25.01.2012**
(21) Application number: 08702051.7
(22) Date of filing: 05.02.2008
(51) Int. Cl.: E04H 17/26, F16G 11/04, A01K 3/00, F16G 11/14

(54) **WIRE TERMINATION DEVICE**
DRAHTANSCHLUSSVORRICHTUNG
DISPOSITIF DE RACCORD DE FIL

(30) Priority: 08.02.2007 GB 0702405; 23.08.2007 GB 0716424
(43) Date of publication of application: 21.10.2009
(73) Proprietor: GRIPPLE LIMITED, Sheffield S4 7UQ (GB)
(72) Inventor: LAMBOURN, Mathew, Gordon, Peterborough PE2 9RU (GB); CLARKE, Neil, Sheffield S11 7JN (GB)
(74) Representative: Houghton, David
(86) International application number: PCT/GB2008/000391
(87) International publication number: WO 2008/096116

(56) References cited:
- EP-A- 0 462 308
- CA-C- 1 279 463
- DE-U1- 20 302 616
- GB-A- 2 378 213
- US-A- 774 295
- US-A- 4 717 123

## Description

This invention relates to a wire termination device such as is used to secure an end of a fence line wire, a trellis or vineyard wire, or a stock fence wire to an end post.

Such a device is known having a body with a through-bore into which protrudes wedging means (such as a ball, roller, wedge or cam lever) urged by spring means, whereby a wire inserted in one direction into the through-bore can push past the wedging means, but on attempting to withdraw the wire from the device in the opposite direction the wedge means is urged by the spring means to grip the wire, see e.g. GB 2 378 213 disclosing a device having the features of the preamble of claim 1. Such device may abut an end post (e.g. of metal) having a hole through which the wire is passed before being inserted into the termination device.

Such a device is also known having, additionally, a second through-bore without wedging means, enabling the device to be used to secure a wire end to a post without a hole (e.g. a round wooden post) by passing the wire through the second through-bore, then round the post, and finally through the bore with the wedging means.

The object of the present invention is to adapt such a device as finally described above for quick and easy deployment on a stock fence having a plurality of horizontal or line wires (e.g., eight or ten) and spaced vertical wires secured to the horizontal wires, either by twisting therearound or by a separate piece of wire twisted around the cross-over point; the problem with which, when terminating round a post, has been the time expended and effort needed to remove vertical wires in order to ensure an adequate end portion of each horizontal wire to pass through the second through-bore of the device, then round the end post and finally through the bore with the wedging means.

According to the present invention, a wire termination device of the type having a body with a first through-bore into which protrudes wedging means urged by spring means, and having a second through-bore without wedging means, is characterised in that the second through-bore is interrupted by a transverse notch in the body of a width commensurate with the diameter of the horizontal wires of a stock fence with which the device is to be used, and each portion of the body separated by the notch is provided with a longitudinal entry slot into the second through-bore commensurate with the diameter of said horizontal wires, with the slot in one portion at the opposite side of the body to the slot in the other portion.

The second through-bore may be parallel to the first through-bore or in the same plane but diverging therefrom, e.g. at about 30°, thus the device can be affixed to a horizontal wire of a stock fence by presenting the notch to the wire and then turning the device so as to enable the horizontal wire to pass through both slots and become aligned within the remainder of the second through-bore, whereafter a free end of the horizontal wire can be inserted into the first through-bore, after passing round an end post, to be secured in the device by the wedging means. The free end of wire may be passed through the first through-bore so as to project therefrom to enable a tensioning tool to be applied thereto; however, as the wire adjacent the free end must be kinked sharply to enter the first through-bore, it is preferable for tensioning of the wire round the post to be effected when it has been connected to a corresponding horizontal wire in a successive length of stock fence by a connecting and tensioning device of the type having parallel through-bores each of which has associated wedging means preventing withdrawal of wires inserted in opposite directions.

Alternatively - and preferably - the second through-bore may be perpendicular to the first through-bore; thus the device can be affixed to a horizontal wire of a stock fence by presenting the notch to the wire and then turning the device so as to enable the horizontal wire to pass through both slots and become aligned within the remainder of the second through-bore, whereafter a free end of the horizontal wire can be inserted into the first through-bore after passing round an end post; alternatively, the device can be affixed to a vertical wire of a stock fence by presenting the notch to the wire, intermediate two horizontal wires or straddling the twist of the vertical wire round one horizontal wire, and then turning the device so as to enable the vertical wire to pass through both slots and become aligned within the remainder of the second through-bore, whereafter a free end of the horizontal wire can be inserted into the first through-bore after passing round an end post. Both through-bores may lie in the same plane; thus the end of a horizontal wire inserted into the first through-bore will abut the horizontal or vertical wire aligned within the second through-bore, tensioning of the horizontal wire about the end post being effected when it has been connected to a corresponding horizontal wire in a successive length of stock fence by a connecting and tensioning device of the type having parallel through-bores each of which has associated wedging means preventing withdrawal of wires inserted from opposite directions. Alternatively, and preferably, the through-bores lie in separate planes; whereby, the end of a horizontal wire inserted through the first through-bore can pass beyond the portion of horizontal or vertical wire aligned within the second through-bore, so that a tensioning tool may be applied to the end portion of the horizontal wire projecting beyond that horizontal or vertical wire.

There may be one or more vertical wires between the device and the end post, which, in the absence of the notch and the slots in the body, would have had to be removed to enable the horizontal wire to be passed through the un-interrupted second through-bore, then round the end post, and back to and through the first through-bore with wedging-means.

It will be appreciated that a device according to the invention can alternatively be used with a plain fence line wire, a trellis or vineyard wire to secure said wire round an end post in the manner as before, passing the said wire through the notched and slotted second through-bore before passing said wire round the end post and through the first through-bore.

Three embodiments of the invention will now be described, by way of example only, with reference to the accompanying drawings, in which
Figure 1 is a perspective view of a preferred embodiment of wire termination device in accordance with the invention;
Figure 2 is an elevation of the other side of the device of Figure 1;
Figure 3 is an end elevation of the device as seen from the right-hand side of Figure 2;
Figure 4 is an end elevation of the device as seen from the left-hand side of Figure 2;
Figure 5 is a plan view of the device of Figures 1 to 4;
Figure 6 is an enlarged longitudinal section of the device taken from the line A-A in Figure 5;
Figures 7 to 11 are fragmentary perspective views showing stages in the application of the device of Figures 1 to 6 to secure a horizontal wire of a stock fence to an end post;
Figure 12 is a fragmentary plan corresponding to Figure 11;
Figure 13 is a perspective view of another embodiment of wire termination device in accordance with the invention;
Figure 14 is an elevation of the other side of the device of Figure 13;
Figure 15 is an end elevation of the device as seen from the right-hand side of Figure 14;
Figure 16 is an end elevation of the device as seen from the left-hand side of Figure 14;
Figure 17 is a plan view of the device of Figures 13 to 16;
Figure 18 is an enlarged longitudinal section of the device of Figures 13 to 16 taken from the line B-B of Figure 17;
Figure 19 corresponds to Figure 12 but shows the device of Figures 13 to 18 in place of the device of Figures 1 to 6; and
Figures 20 and 21 correspond to Figures 18 and 19 but show a modified form of device in accordance with the invention affording easier transitions of wire through the device.

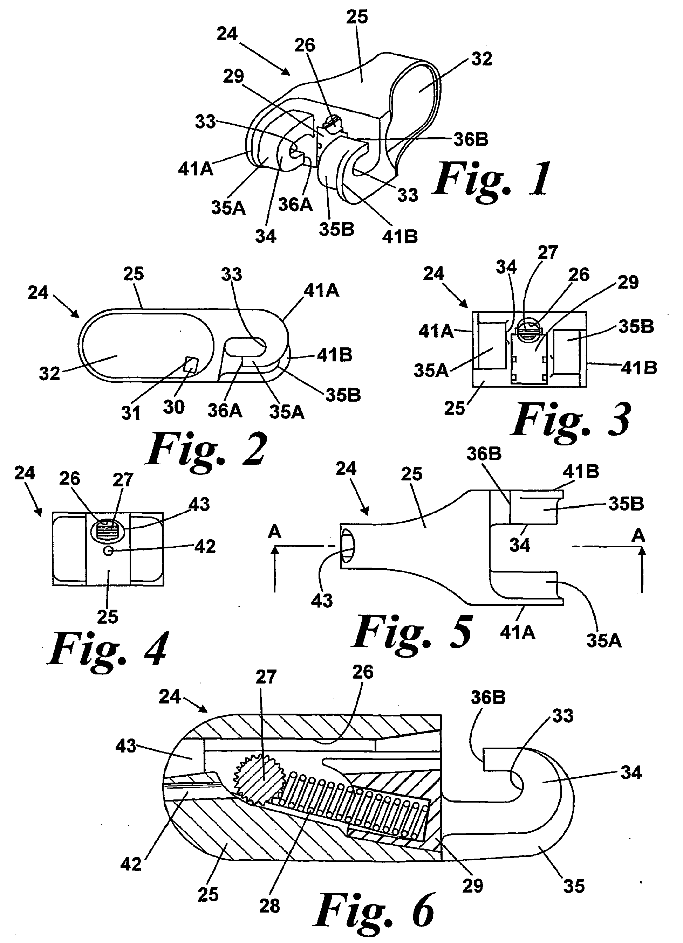

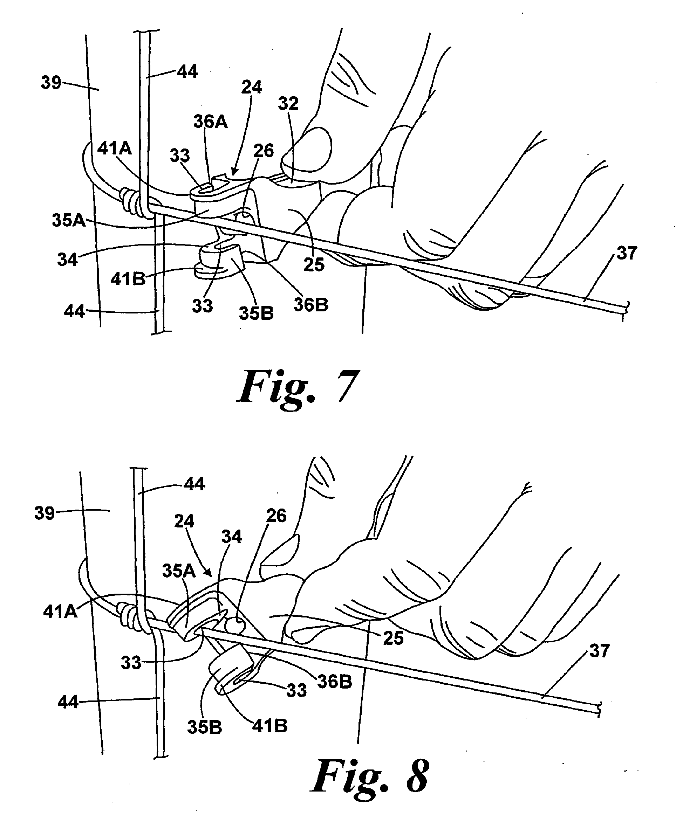

The device 24 shown in Figures 1 to 6 has a body 25 of zinc alloy with a first through-bore 26 into which protrudes wedging means 27 consisting of a ribbed roller of ceramic material urged by a coil compression spring 28 retained by an abutment 29 of nylon having ribs 30 snapping into apertures 31 (only one shown) in flanks 32 of the body. A second through-bore 33 is interrupted by a transverse notch 34 in the body of a width commensurate with the diameter of the horizontal wires of a stock fence with which the device is to be used (see Figures 7 to 12), and each portion 35A, 35B of the body separated by the notch is provided with a longitudinal entry slot 36A, 36B into the second through-bore commensurate with the diameter of said horizontal wires, with the slot 36A in the portion 35A at the opposite side of the body to the slot 36B in the portion 35B.

For the purposes of the description of the manner of application of the device, the portions of the body separated by the notch 34 will be referred to as "hooks" 35A, 35B (facing oppositely with their free edges spaced from the rest of the body 25 by the longitudinal entry slots 36A, 36B).

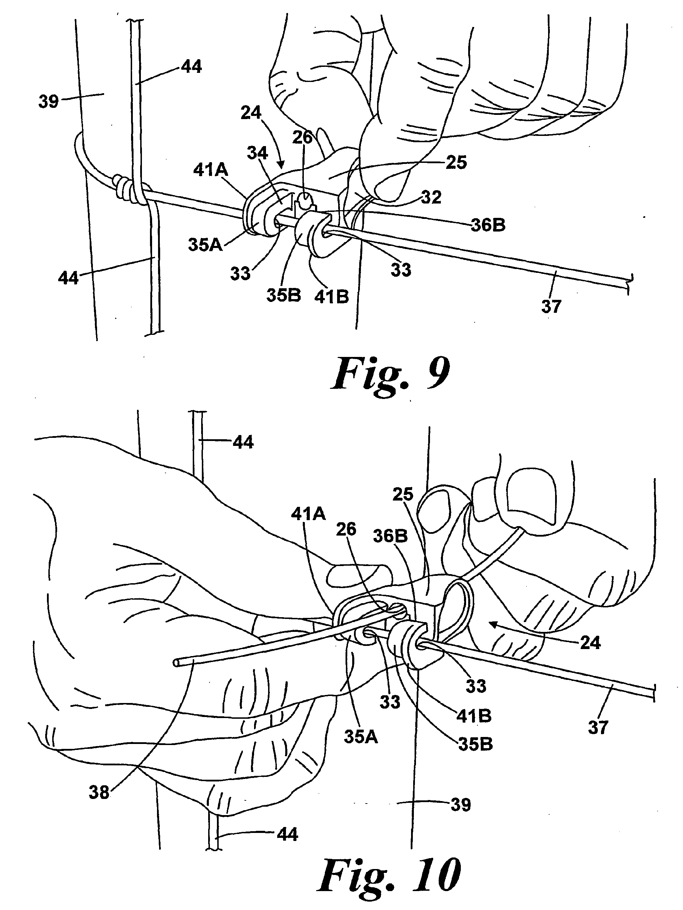

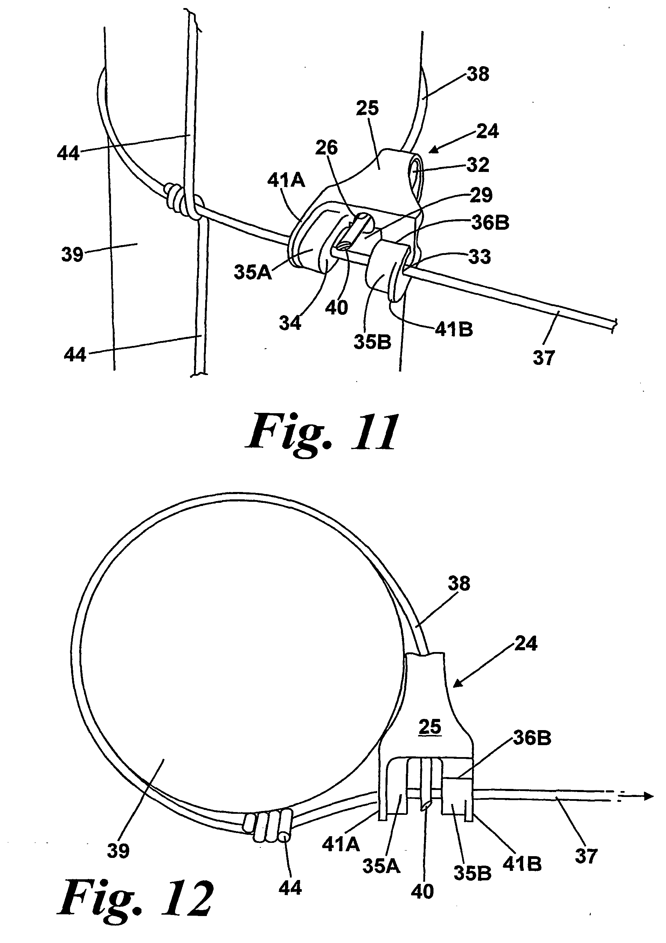

The second through-bore 33 in the device 24 of Figures 1 to 6 is perpendicular to the first through-bore 26; thus this device can be affixed to a horizontal wire 37 of a stock-fence by presenting the notch 34 to the wire (as shown in Figure 7) and then turning the device (as shown in Figure 8) so as to enable the horizontal wire to pass through both slots 36A, 36B and become aligned within the remainder of the second through-bore 33 (as can be seen in Figure 9), whereby the device is affixed to the wire 37 by the oppositely facing hooks 35A, 35B. A free end 38 of the horizontal wire is shown in Figure 10 being inserted into the first through-bore 26 after passing round an end post 39, whereafter surplus wire can be cropped off at 40 between the hooks 35A, 35B (see Figures 11 and 12), the end 38 of the horizontal wire 37 being able to pass beyond the portion of horizontal wire aligned with the second through-bore 33 by virtue of the through-bores 26, 33 lying in separate planes.

Tensioning of the horizontal wire 37 about the end post 39 may be effected by applying a tensioning tool (not shown) to the free end 38 before cropping-off surplus wire or it may be effected when it has been connected to a corresponding horizontal wire in a successive length of stock fence (not shown) by a connecting and tensioning device (not shown) of the type having parallel through-bores each of which has associated wedging means preventing withdrawal of wires inserted from opposite directions, e.g. a GRIPPLE® device.

Figure 12 shows that there is only one vertical wire 44 above and below the horizontal wire 37 between the device 24 and the end post 39 (but there could be two or more), which, in the absence of the notch 34 and slots 36A, 36B in the body 25, would have had to be removed to enable the horizontal wire 37 to be passed through the uninterrupted second bore, then round the end post, and back to and through the first through-bore with wedging means.

The hooks 35A, 35B are stiffened by integral around flanges 41A, 41 B, which together with the indented flanks 32 of the body 25 help to minimise the weight of material needed in the body without sacrificing its strength.

A small hole 42 is provided alongside the entry end 43 of the first through-bore 26 (see particularly Figure 6) to enable a rod to be inserted to push the roller 27 against the urge of the spring 28, to enable the wire end 38 to be released if it is necessary to disconnect the stock fence from the end post 39.

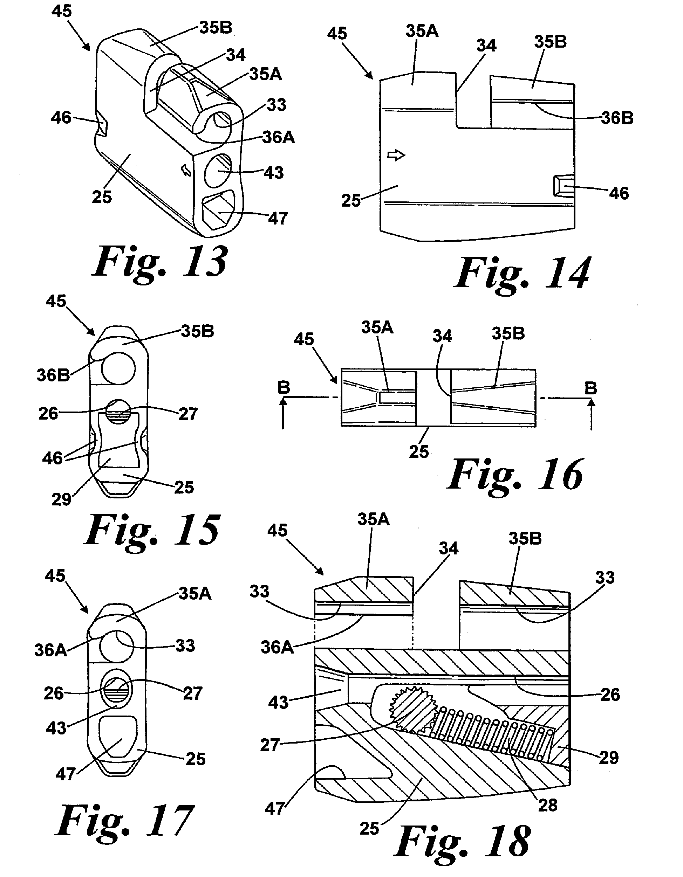

In the wire termination device 45 in Figures 13 to 19 like reference numerals represent like or similar features to those of the device shown in Figures 1 to 12, the principal difference being that the first through-bore 26 with the wedging means 27 is parallel to the second through-bore 33 interrupted by the notch 34. Also to be noted as differences are the thinner portions 46 of the body 25 clinched in slightly towards each other to secure the abutment 29 for the spring 28, and the blind opening 47 in one end of the body 25 to save weight of zinc alloy without sacrificing strength.

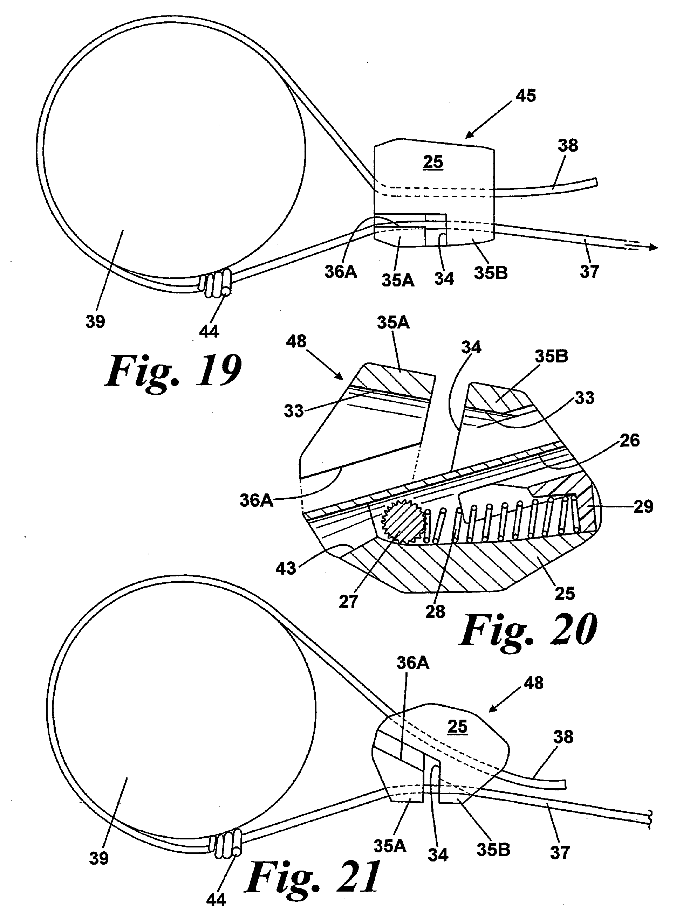

As can be seen in Figure 19, the effect of having the through-bores 26, 33 in parallel is that the free end 38 of the horizontal wire 37 needs to be quite distinctly kinked to enable it to be inserted into the through-bore 26, with the device 45 reasonably close to the end post 39. Thus, it is not possible to tighten the loop of the wire 37 round the post by pulling the free end 38 relative to the device 45, so tensioning can only be effected when the wire 37 has been connected to a corresponding horizontal wire in a successive length of stock fence (not shown) by a connecting and tensioning device (not shown) of the type having parallel through-bores each of which has associated wedging means preventing withdrawal of wires inserted from opposite directions.

This restriction can be alleviated by means of the modified wire termination device 48 shown in Figures 20 and 21 in which like reference numerals represent like features to those of the device 45 shown in Figures 13 to 19, but, while the through-bores 26, 33 lie in a common plane, they diverge at about 30°, so that the transition of the free end 38 of the horizontal wires 37 through the device is easier than through the device 45. Furthermore, the greater depth that can be afforded to the "hook" portion 35A affords greater security of the device 48 on the horizontal wire 37 than with the device 45.

## Claims

1. A wire termination device of the type having a body (25) with a first through-bore (26) into which protrudes wedging means (27) urged by spring means (28), and having a second through-bore (33) without wedging means, the second through-bore (33) being interrupted by a transverse notch (34) in the body of a width commensurate with the diameter of the horizontal wires of a stock fence with which the device is to be used, **characterised in that** each portion (35A, 35B) of the body separated by the notch is provided with a longitudinal entry slot (36A,36B) into the second through-bore commensurate with the diameter of said horizontal wires, with the slot (36A) in one portion (35A) at the opposite side of the body to the slot (36B) in the other portion (35B).

2. A wire termination device as in Claim 1 **characterised in that** the second through bore (33) is parallel to the first through-bore (26).

3. A wire termination device as in Claim 1 **characterised in that** the second through-bore (33) is in the same plane as the first through-bore (26) but divergent therefrom.

4. A wire termination device as in Claim 1, **characterised in that** the second through-bore (33) is perpendicular to the first through-bore (26).

5. A wire termination device as in Claim 4, **characterised in that** both bores (26,33) lie in the same plane.

6. A wire termination device as in Claim 4, **characterised in that** the through-both bores (26,33) lie in separate planes.

7. A wire termination device as in any one of Claims 1 to 6, **characterised in that** the body portions (25) are stiffened by integral arcuate flanges.

## Patentansprüche

1. Drahtabschlussvorrichtung von der Art, die einen Körper (25) mit einer ersten Durchgangsbohrung (26) aufweist, in die ein durch ein Federmittel (28) gedrängtes Klemmmittel (27) ragt, und eine zweite Durchgangsbohrung (33) ohne Klemmmittel aufweist, wobei die zweite Durchgangsbohrung (33) von einer Quer-Aussparung (34) in dem Körper mit einer Breite, die dem Durchmesser der waagerechten Drähte eines Viehzauns, womit die Vorrichtung verwendet werden soll, entspricht, unterbrochen ist, **dadurch gekennzeichnet, dass** jeder Abschnitt (35A, 35B) des Körpers, der durch die Aussparung getrennt ist, mit einem längslaufenden Eingangsschlitz (36A, 36B) in die zweite Durchgangsbohrung, der dem Durchmesser der waagerechten Drähte entspricht, versehen ist, wobei sich der Schlitz (36A) in dem einen Abschnitt (35A) in Bezug auf den Schlitz (36B) in dem anderen Abschnitt (35B) an der entgegengesetzten Seite des Körpers befindet.

2. Drahtabschlussvorrichtung nach Anspruch 1, **dadurch gekennzeichnet, dass** die zweite Durchgangsbohrung (33) zu der ersten Durchgangsbohrung (26) parallel ist.

3. Drahtabschlussvorrichtung nach Anspruch 1, **dadurch gekennzeichnet, dass** sich die zweite Durchgangsbohrung (33) in der gleichen Ebene wie die erste Durchgangsbohrung (26) befindet, aber davon abweicht.

4. Drahtabschlussvorrichtung nach Anspruch 1, **dadurch gekennzeichnet, dass** die zweite Durchgangsbohrung (33) rechtwinkelig zu der ersten Durchgangsbohrung (26) verläuft.

5. Drahtabschlussvorrichtung nach Anspruch 4, **dadurch gekennzeichnet, dass** beide Bohrungen (26, 33) in der gleichen Ebene liegen.

6. Drahtabschlussvorrichtung nach Anspruch 4, **dadurch gekennzeichnet, dass** die beiden Durchgangsbohrungen (26, 33) in getrennten Ebenen liegen.

7. Drahtabschlussvorrichtung nach einem der Ansprüche 1 bis 6, **dadurch gekennzeichnet, dass** die Körperabschnitte (35) durch einstückige bogenförmige Flansche versteift sind.

## Revendications

1. Dispositif de terminaison de fil du type comportant un corps (25) avec un premier alésage traversant (26) dans lequel des moyens de calage (27) font saillie, poussés par des moyens formant ressort (28), et comportant un deuxième alésage traversant (33) sans moyens de calage, le deuxième alésage traversant (33) étant interrompu par une encoche transversale (34) dans le corps d'une largeur proportionnée au diamètre des fils horizontaux d'une clôture pour bétail avec laquelle le dispositif est destiné à être utilisé, **caractérisé en ce que** chaque partie (35A, 35B) du corps séparée par l'encoche est pourvue d'une fente d'entrée longitudinale (36A, 36B) dans le deuxième alésage traversant proportionnelle au diamètre desdits fils horizontaux, la fente (36A) dans une partie (35A) étant du côté du corps opposé à la fente (36B) dans l'autre partie (35B).

2. Dispositif de terminaison de fil selon la revendication 1, **caractérisé en ce que** le deuxième alésage traversant (33) est parallèle au premier alésage traversant (26).

3. Dispositif de terminaison de fil selon la revendication 1, **caractérisé en ce que** le deuxième alésage traversant (33) est dans le même plan que le premier alésage traversant (26), mais diverge de celui-ci.

4. Dispositif de terminaison de fil selon la revendication 1, **caractérisé en ce que** le deuxième alésage traversant (33) est perpendiculaire au premier alésage traversant (26).

5. Dispositif de terminaison de fil selon la revendication 4, **caractérisé en ce que** les deux alésages (26, 33) se trouvent dans le même plan.

6. Dispositif de terminaison de fil selon la revendication 4, **caractérisé en ce que** les alésages traversants (26, 33) se trouvent dans des plans séparés.

7. Dispositif de terminaison de fil selon l'une quelconque des revendications 1 à 6, **caractérisé en ce que** les parties de corps (25) sont rigidifiées par des rebords intégraux en forme d'arcs.
